# EUROPEAN PATENT SPECIFICATION

(11) **EP 4 326 684 B1**
(45) Date of publication and mention of the grant of the patent: **04.06.2025**
(21) Application number: 22719042.8
(22) Date of filing: 14.04.2022
(51) Int. Cl.: C03C 8/14, C03C 17/04, C03C 17/36, B32B 17/00, H05B 3/84

(54) **ENAMEL PASTE COMPOSITIONS, ENAMEL COATED PRODUCTS, AND METHODS OF MANUFACTURING THE SAME**
EMAILPASTENZUSAMMENSETZUNGEN, EMAILBESCHICHTETE PRODUKTE UND VERFAHREN ZUR HERSTELLUNG DAVON
COMPOSITIONS DE PÂTE D'ÉMAIL, PRODUITS REVÊTUS D'ÉMAIL ET LEURS PROCÉDÉS DE FABRICATION

(30) Priority: 21.04.2021 GB 202105702
(43) Date of publication of application: 28.02.2024
(73) Proprietor: Fenzi AGT Netherlands B.V., 6222 NZ Maastricht (NL)
(72) Inventor: DESANTE, Olivier Jean André, 6222 NZ Maastricht (NL); LOONTJENS, Jean Luc, 6222 NZ Maastricht (NL); TRIEPELS, Martin Paul Ernest, 6222 NZ Maastricht (NL); VALLA, Maxence, 6222 NZ Maastricht (NL)
(74) Representative: van Dam, Vincent
(86) International application number: PCT/NL2022/050205
(87) International publication number: WO 2022/225391

(56) References cited:
- EP-A1- 0 505 892
- EP-A1- 1 298 099
- WO-A1-2005/073140
- US-A1- 2017 135 160

## Description

### Field

The present specification relates to enamel paste compositions, enamel coated products, and methods of manufacturing the same.

### Background

In the automotive glazing industry, it is common to decorate windshields, back and side lights, and other glass components with a black band of obscuration enamel extending around a peripheral region of the components. A primary function is to shield the glue that holds the glass components in place from ultraviolet radiation which would otherwise decompose the glue. A secondary function is to cover up electrical circuits, wires, and connectors that ensure functionality of electrical or electronic components attached to, or embedded into, the glass component and ensure a clean aesthetic appearance.

Enamels typically comprise glass frit and pigment in an organic carrier medium. The enamels are applied as a paste or ink in a screen printing or ink jet process to a flat glass substrate and are subsequently fired at high temperatures, during which the organic carrier medium of the paste or ink burns off and the enamel fuses together and establishes a bond to the substrate. The firing process also softens the substrate which can be formed into the final shape by a bending process during the firing process. It is also known to use a two-step firing process to form an enamel layer, the process comprising: (i) a first "pre-firing" heating step, at a temperature below the melting temperature of the glass frit in the enamel paste, in order to remove organic carrier medium components of the enamel paste, thus forming a dry, pre-fired layer; and (ii) a second "firing" heating step at a temperature above the melting point of the glass frit in the enamel paste to fuse the enamel. During the second firing step the substrate can be formed into the final shape by a bending process.

In addition to obscuration enamels, electrical components can also be printed onto a glass component in a similar manner. In this case, the enamel formulation will typically comprise a metallic, electrically conductive powder (e.g. silver powder), glass frit, and an organic carrier medium. Such conductive enamel pastes can be applied in addition to the obscuration enamel pastes and fired in the same process to form a glass component which comprises both electrical components (e.g. antennae and/or heating elements) and obscuration enamel, with the obscuration enamel arranged to obscure electrical connections (e.g. bus bars) to the electrical components.

More recently, functional thin films have also been applied to glass components using, for example, a vapour deposition process. Such functional thin films are of a nanometre scale thickness and can function, for example, as heating elements (substituting the more conventional screen or inkjet printed conductive silver-enamel heater lines) and/or IR reflective elements.

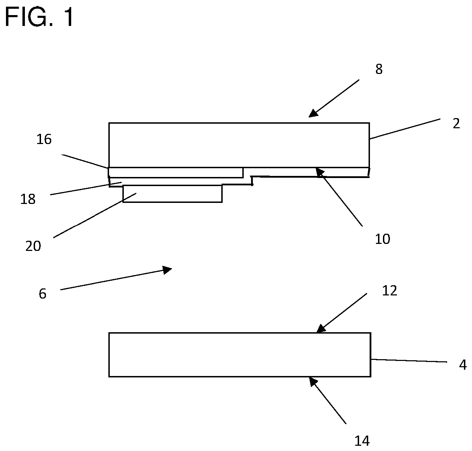

US20170135160 (granted as US10455645B2) describes an example of a method for fabricating a motor vehicle glass panel comprising a system of thin, sputtered conductive layers for heating the glass panel. The glass panel configuration described in US20170135160 is shown in Figure 1 and comprises two glass sheets 2, 4 united by an interlayer sheet 6. In use, glass sheet 2 forms the outer glass sheet of the glass panel while glass sheet 4 forms the inner glass sheet. The sides of the glass sheets in a motor vehicle glass panel are conventionally numbered from the outside towards the inside. As such, the outer side 8 of outer glass sheet 2 is conventionally designated side 1, the inner side 10 of outer glass sheet 2 is conventionally designated side 2, the side 12 of the inner glass sheet 4 which faces the outer glass sheet 2 is conventionally designated side 3, while the interior side 14 of inner glass sheet 4 is conventionally designated side 4. In the configuration of US20170135160 shown in Figure 1, an enamel layer 16 is formed on side 2 of the outer glass sheet. A thin coating 18 is formed over the enamel layer 16 and over uncoated portions of side 2 of the outer glass sheet. In US20170135160, the thin coating is a system of heated conductive layers formed by cathode sputtering and comprising an assembly of metal layers and of dielectric layers, the assembly exhibiting a thickness which may be 0.1 micrometres or less. An electrical bus bar 20 is then formed on the thin coating 18 over the enamel layer 16. As previously indicated, US20170135160 discloses that the system can be fired in a two-step firing process including a first pre-firing step to remove organic carrier medium and a second firing step at higher temperature to melt and fuse the glass frit, bending being performed during the second firing step of the firing process to form the shaped glass article.

US20170135160 discloses a problem with the configuration illustrated in Figure 1 and described above. Namely, US20170135160 identifies that the power delivered to the busbars is not completely transmitted to the conductive layers and this results in a loss of power, adversely affecting heating performance of the glass panel. US20170135160 identifies that this problem is at least partially caused by surface roughness of the enamel layer adversely affecting the overlying conductive coating and the connection of the bus bar to the conductive coating over the enamel layer. As such, US20170135160 describes that the surface roughness Rₐ of the enamel layer should be no greater than 0.5 micrometres and preferably no greater than 0.1 micrometres. Several methods are described for reducing the roughness of the enamel layer including: (i) use of an enamel composition comprising glass frit and pigment, wherein the mean particle size of the pigment, and optionally the glass frit, is not greater than 5 micrometres; (ii) screen printing the enamel paste using a printing screen which has a low surface roughness coating surface; (iii) varying the surface tension and viscosity in the enamel paste layer applied to provide a smoothing effect; and (iv) inkjet printing the enamel rather than using screen printing.

US20170135160 describes that the composition of the enamel paste is not specific to the application. It is disclosed that for enamel layers produced by screen printing, the mean roughness Rₐ was 0.69 micrometres (i.e. too rough, being above the 0.5 micrometre threshold). For the layers applied by an inkjet technique, the roughness obtained was substantially reduced and a mean roughness of the order of 0.14 micrometres was obtained using an enamel composition produced by Johnson-Matthey (JM1L6027).

The present invention is directed to an improved enamel paste composition specifically tailored for use in a method such as that described in US20170135160.

WO2005/073140 A1 discloses glass composition suitable for forming a frit comprises SiO₂, B₂O₃, ZnO and TiO₂, together with minor amounts of other components.

EP 1 298 099 A1 discloses a ceramic color composition which comprises, as a solid powder, 50 to 90 wt.% of a mixture containing 5 to 95 parts by weight of a first lead-free glass powder comprising at least SiO₂, ZnO, and B₂O₃ as glass components, and 5 to 95 parts by weight of a second lead-free glass powder comprising at least SiO₂, Bi₂O₃, and B₂O₃ as glass components, 10 to 40 wt.% of an inorganic pigment, and 0 to 10 wt.% of an inorganic filler.

EP 0 505 892 A1 discloses glass frits, a process for their manufacture and use in enamel barrier layers for stopping silver migration.

### Summary

As described in the background section, US20170135160 indicates that the composition of the enamel paste is not specific for use with thin functional coatings beyond the characteristics of the particle size of the glass frit and pigment and the viscosity of the enamel paste provided by the organic carrier medium. US20170135160 does not give any information about the types of glass frit used in the enamel beyond the use of a commercially available enamel composition from Johnson Matthey. Furthermore, there is no indication that the chemical composition of the glass frit will have any effect on the surface roughness of the enamel and the subsequent effect on the thin functional coating deposited thereon. Rather, US20170135160 indicates that a smoother enamel surface can be achieved by using small particle size pigment in the enamel composition and also suggests modifications to the printing process used to deposit the enamel.

The present inventors have developed an improved enamel paste formulation for the application described in US20170135160. Specifically, the improved enamel paste formulation comprises a composition which has the following characteristics:
(i) a glass frit composition which has a low firing (melting) temperature such that the glass frit can soften and flow at a low firing temperature in order to provide a smooth enamel layer at low temperatures for application of a thin coating thereon;
(ii) a glass frit composition which has a high crystallization temperature, such that the glass enamel does not crystallize and damage the thin functional coating disposed thereon during heating and bending of the coated glass article;
(iii) a glass frit composition which meets the characteristics of (i) and (ii) while also having good silver hiding and UV blocking characteristics after heating and bending of the coated glass article.

That is, the chemical composition of the glass frit component of the enamel paste has an impact on the quality of a thin coating deposited thereon and the resultant coated glass article. In particular, the glass frit must be tailored to have a low firing temperature and a high crystallization temperature to yield a low roughness surface enamel layer and avoid damage of the thin functional coating, both during deposition of the thin functional coating and also during further processing of the coated glass article, i.e. heating and bending of the coated glass article. The enamel must also have good silver hiding and UV blocking properties, which are affected by the type of glass frit and the firing temperature as well as the pigment. The present specification thus provides an enamel paste composition tailored for application of thin functional coatings thereon. The enamel paste comprises:
30 to 40% by weight of a bismuth silicate glass frit;
20 to 30% by weight of a zinc silicate glass frit;
15 to 25% by weight of a pigment; and
10 to 20% by weight of an organic carrier medium,
wherein the bismuth silicate glass frit comprises at least silicon, bismuth, boron, and lithium, and is free of lead and cadmium,
wherein the zinc silicate glass frit comprises at least silicon, zinc, sulphur, and lithium, and is free of lead, cadmium, and bismuth,
wherein the glass frits and the pigment in the enamel paste each have a D90 particle size distribution of less than 15 micrometres, and
wherein the enamel paste has a viscosity between 5 and 150 Pa.s⁻¹ at a shear rate of 100 s⁻¹.

The zinc silicate frit brings silver hiding properties to the enamel. The bismuth silicate frit allows the enamel to be processed at low temperature and develops a smooth surface at a low firing temperature. The frits also have a high crystallization temperature. As such, a combination of the two frits provides a low firing temperature smooth surface, silver hiding properties over a large range of temperature, and a high crystallization temperature.

The bismuth silicate glass frit has the following composition (expressed as oxide components:

| Component | Mol% |
|---|---|
| SiO₂ | 45 - 55 |
| Bi₂O₃ | 15 - 25 |
| B₂O₃ | 10 - 20 |
| Li₂O | 2 - 10 |
| Al₂O₃ | 0 - 5 |
| ZrO₂ | 0 - 5 |
| K₂O | 0 - 1 |
| MgO | 0 - 1 |
| CaO | 0 - 1 |

The zinc silicate glass frit has the following composition:

| Component | Mol% |
|---|---|
| SiO₂ | 45 - 55 |
| ZnO | 20 - 30 |
| Li₂O | 1 - 10 |
| S | 1 - 10 |
| B₂O₃ | 0 - 10 |
| Na₂O | 0 - 10 |
| F | 0 - 10 |
| MnO | 0 - 10 |
| CaO | 0 - 1 |
| Fe₂O₃ | 0 - 1 |
| MgO | 0 - 1 |

The pigment is optionally a CuCr black pigment.

The present specification also provides for the use of the enamel paste to fabricate a coated glass article comprising a glass substrate, an enamel layer disposed on the glass substrate, and a thin coating having a thickness of no greater than 0.5, 0.4, 0.3, 0.2 or 0.1 micrometres disposed on the enamel layer.

The enamel paste is tailored for a method of fabricating a coated glass article, including, but not limited to, the type of coated glass articles described in US20170135160. The method comprises:
depositing an enamel paste on a portion of a glass substrate;
firing the enamel paste at a temperature T1 to form an enamel layer;
depositing a thin functional coating over at least a portion of the enamel layer, the thin coating having a thickness of no greater than 0.5, 0.4, 0.3, 0.2 or 0.1 micrometres;
firing and bending the glass substrate with the enamel layer and the thin functional coating thereon at a temperature T2 which is greater than T1 to form the coated glass article,
wherein the enamel paste is formulated to have a melting temperature lower than T1 and a crystallization temperature higher than T2.

The paste composition as previously described can be used in the method. However, it is also envisaged that for different applications the firing temperature T₁ and the bending temperature T₂ may differ. In this case, the formulation of the enamel paste can be modified to ensure that it has a firing temperature lower than T₁ and a crystallization temperature higher than T₂ in order to ensure that a thin film coating disposed on the enamel is not damaged during processing, while also achieving the colour characteristics and/or silver hiding characteristics required for an end application after processing at T₂. As such, the method of this specification is not limited to the specific enamel paste composition tailored for an end application having a specifically defined T₁ and T₂. That is, a skilled person in the art of enamel paste formulation will be able to utilize the teachings of this specification to modify the composition of the paste described herein so as to be suitable for thin film coating applications having different T₁ and T₂ values and utilizing different bending processes including, for example, sag bending, press bending, and variants thereof.

Advantageously, the enamel layer has a surface roughness Rₐ of nc more than 1, 0.7, 0.5, or 0.3 micrometres and/or a roughness R_{z} of no more than 5, 4, 3, 2, or 1 micrometre. Furthermore, for obscuration applications, the enamel layer advantageously has an L-value of no more than 5, 4.5, 4, or 3.5.

The thin coating can be deposited via a vacuum deposition process such as a cathode sputtering process as is the case for the application described in US20170135160. The thin coating may be deposited over at least a portion of the glass substrate in addition to being deposited over at least a portion of the enamel layer. Furthermore, as also described in US20170135160, the thin coating can be electrically conductive, optionally comprising a plurality of sub-layers (e.g. 2 or 3 silver sub-layers), and at least one electrical connector can be deposited on the thin coating over the enamel layer.

While the enamel pastes of the present invention have been developed for applications such as described in US20170135160, it is envisaged that enamel pastes according to the present specification will be useful for other functional thin film coatings on glass substrates including electrical, optical, and thermal functional coatings.

### Brief Description of the Drawings

For a better understanding of the present invention and to show how the same may be carried into effect, certain embodiments of the present invention will now be described by way of example only with reference to the accompanying drawings, in which:
Figure 1 shows an automotive glass panel configuration of the type described in US20170135160;

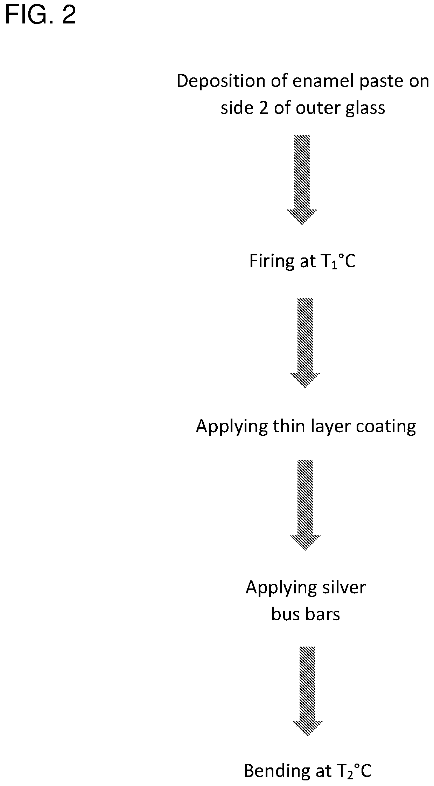

Figure 2 shows a flow diagram of the steps involved in providing a coated glass sheet for use in the automotive glass panel configuration shown in Figure 1;

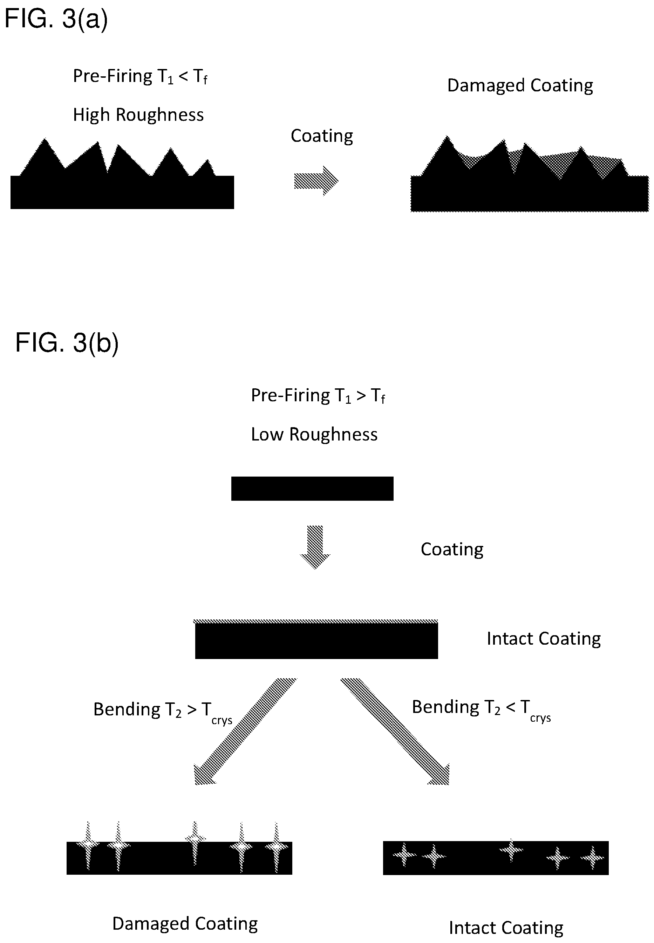

Figures 3(a) and 3(b) show flow diagrams illustrating that following the method of Figure 2 leads to damage of a thin film during processing unless the firing (melting) temperature of the enamel paste composition is lower than the firing temperature T₁ and the crystallization temperature of the enamel paste composition is higher than the bending temperature T₂;

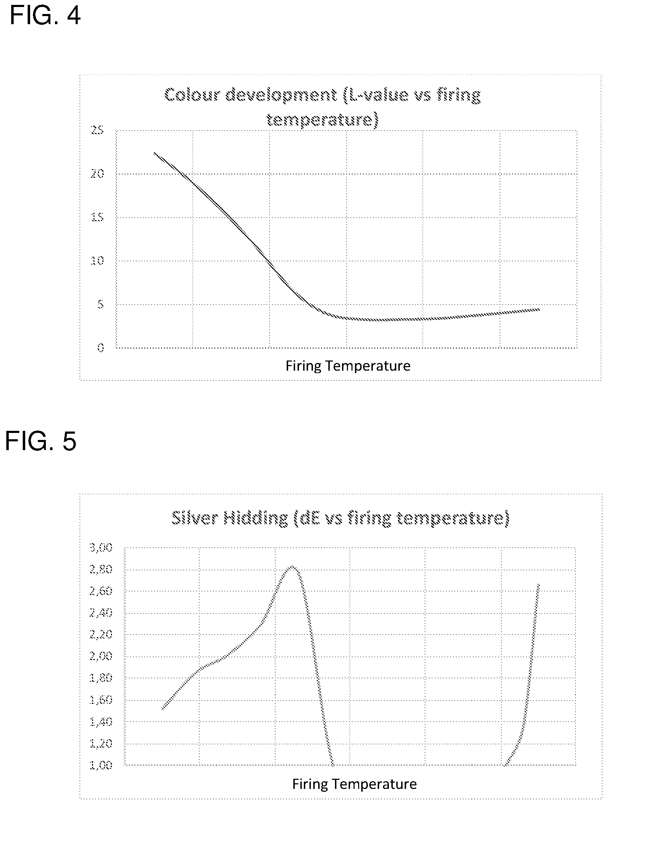

Figure 4 shows the colour development characteristics of an enamel layer formed using an enamel paste composition according to this specification in terms of its L-value vs firing temperature, the enamel being formulated to have a low L-value at the final firing (bending) temperature T₂ of the coated glass manufacturing method without crystallization; and
Figure 5 shows the silver hiding characteristics of an enamel layer formed using an enamel paste composition according to this specification in terms of its dE value vs firing temperature, the enamel being formulated to have a low dE value (good silver hiding) at the final firing (bending) temperature T₂ of the coated glass manufacturing method without crystallization.

### Detailed Description

As described in the background section, the glass panel configuration described in US20170135160 is shown in Figure 1 and comprises two glass sheets 2, 4 united by an interlayer sheet 6. The outer side 8 of outer glass sheet 2 is conventionally designated side 1, the inner side 10 of outer glass sheet 2 is conventionally designated side 2, the side 12 of the inner glass sheet 4 which faces the outer glass sheet 2 is conventionally designated side 3, while the interior side 14 of inner glass sheet 4 is conventionally designated side 4. An enamel layer 16 is formed on side 2 of the outer glass sheet. A thin coating 18 is formed over the enamel layer 16 and over un-enamelled portions of side 2 of the outer glass sheet. An electrical bus bar 20 is formed on the thin coating 18 over the enamel layer 16. The glass sheets 2, 4 are fired and shaped and then laminated with the interlayer sheet 6 to form the glass panel.

It should be noted that while the configuration shown in Figure 1 has the enamel layer 16 and thin coating 18 disposed on side 2 of a laminated glass panel comprising two glass sheets 2, 4, the present invention is not limited to this configuration. For example, the enamel layer and thin coating could be applied to a different side of such a laminated glass panel or may be applied to a glass panel comprising a single glass sheet.

Figure 2 shows a flow diagram of the steps involved in providing the outer coated glass sheet 2 of the automotive glass panel configuration shown in Figure 1. The method comprises: depositing enamel paste on side 2 of the outer glass sheet; firing at a temperature T₁°C; applying a thin layer coating over the enamel and over un-enamelled portions of the outer glass sheet; applying silver bus bars on the thin layer coating over the enamelled portions of the outer glass sheet; and bending the coated glass sheet at a temperature T₂°C.

Figures 3(a) and 3(b) show flow diagrams illustrating that following the method of Figure 2 leads to damage of the thin film coating during processing unless the firing (melting) temperature of the enamel paste composition is lower than the firing temperature T₁ and the crystallization temperature of the enamel paste composition is higher than the bending temperature T₂.

Figure 3(a) shows that if the enamel paste is initially fired at a temperature T₁ which is below the firing/melting temperature of the glass frit, which is the case in a standard pre-firing step designed to merely remove organic carrier medium rather than melt and fuse the glass frit, then a rough surface results which can lead to a damaged thin film coated when deposited onto such a surface using, for example, a vapour deposition technique.

Figure 3(b) shows that even if the enamel paste is initially fired at a temperature T₁ which is above the firing/melting temperature of the glass frit to provide a smooth surface on which to deposit a thin film coating, the thin film coating can be subsequently damaged during bending of the coated glass sheet if the bending temperature T₂ is above the crystallization temperature of the glass enamel.

As such, Figures 3(a) and 3(b) illustrate that the glass frit in the enamel composition must have both a firing/fusing/melting temperature lower than T₁ to produce a low surface roughness after firing at T₁ and a crystallization temperature higher than T₂ in order to ensure that the thin film coating is deposited in an undamaged form and remains in an undamaged form during processing (bending) at T₂.

In addition to the above, the resultant enamel must meet the functional characteristics required for the application. For example, in the automotive glass panel application of Figure 1, the enamel must have good optical characteristic and good silver hiding properties to: (i) shield glue/adhesive from UV decomposition; and (ii) mask the silver bus bars disposed behind the enamel. These characteristics are dependent on the chemical composition of the glass frit and also on the final firing/bending temperature T₂ used to process the enamel coated glass sheet. As such, for this application the enamel paste composition must be tailored to meet a plurality of requirements including a firing/fusing/melting temperature lower than T₁, a crystallization temperature higher than T₂, and also meet the optical characteristics and silver hiding properties required for the end application after processing at T₂. The enamel must also be chemically and structurally resistant to the thin film coating and vapour deposition method of fabricating the thin film coating over the enamel. Furthermore, for automotive applications it is required that the enamel is acid resistant (0,1N H₂SO₄ for 4 hours at 80°C) and that the coated glass sheet meets a minimum mechanical strength specification.

The present specification provides an enamel paste composition which meets all the aforementioned requirements for an enamel suitable to be used in combination with thin functional coatings, such as self-heated or IR reflective coatings.

The enamel paste comprises: (1) a bismuth silicate glass frit; (2) a zinc silicate glass frit; (3) a pigment; and (4) an organic carrier. Details of an example for the two frit compositions in terms of equivalent oxides are provided below.

### Bismuth Silicate Frit:

| Component | Mol% | Mass% |
|---|---|---|
| SiO₂ | 51.18 | 21.70 |
| Bi₂O₃ | 19.46 | 63.97 |
| B₂O₃ | 16.12 | 7.92 |
| Li₂O | 6.21 | 1.31 |
| Al₂O₃ | 3.00 | 2.16 |
| ZrO₂ | 2.55 | 2.20 |
| K₂O | 0.76 | 0.51 |
| MgO | 0.37 | 0.10 |
| CaO | 0.35 | 0.14 |

### Zinc Silicate Frit:

| Component | Mol% | Mass% |
|---|---|---|
| SiO₂ | 49.09 | 47.11 |
| ZnO | 24.35 | 31.64 |
| Li₂O | 7.82 | 3.73 |
| B₂O₃ | 6.91 | 7.68 |
| Na₂O | 4.82 | 4.77 |
| F | 2.34 | 0.71 |
| MnO | 2.13 | 2.41 |
| S | 1.71 | 0.87 |
| CaO | 0.59 | 0.53 |
| Fe₂O₃ | 0.20 | 0.51 |
| MgO | 0.04 | 0.03 |

The pigment can be an automotive back pigment such as a CuCr black pigment.

The frits and pigment are milled to a desired particle size distribution of D90 < 15 micrometres and mixed with an organic carrier formulation to create a paste with a viscosity between 5 and 150 Pa.s⁻¹ at a shear rate 100 s⁻¹. An example of the paste formulation is provided in the table below:

| **Intermediates** | **Description** | **Ratio (wt%)** |
|---|---|---|
| Frit 1 | Pb/Cd/Bi free Zn/S/Li frit | 25.6 |
| Frit 2 | Pb/Cd free Li/Bi/Si frit | 38.4 |
| Pigment | Black pigment | 21.4 |
| Organic Media | Solvent/Thinner/Thixotropic agent | 14.6 |

The novelty of this paste formulation lies in the subtle mix of properties brought to the enamel to fit the process of producing a self-heated laminated motor vehicle glass panel. Self-heated windshields are relatively new products that have been brought to the market in the past 5 years at the time of writing, and the present specification enables an improvement in performance for such self-heated windshields. As previously indicated, key characteristics of the enamel paste formulation include: (i) low firing temperature; (ii) smooth surface after firing; (iii) good silver hiding properties; and (iv) high crystallization temperature. The zinc silicate frit brings silver hiding properties to the enamel. The bismuth silicate frit allows the enamel to be processed at low temperature and develops a smooth surface at a low firing temperature. Both frits have a high crystallization temperature. The combination of the two frits thus provides a low firing temperature smooth surface, silver hiding properties over a large range of temperatures, and a high crystallization temperature to avoid crystallization during bending of the coated glass sheet. This combination of features enables a nanometre scale silver coating to be applied over the enamel and subsequently subjected to a bending procedure without damaging the coating.

In addition to the above, the enamel paste composition provides an enamel layer after firing at T2 which has good optical and silver hiding characteristics. Figure 4 shows the colour development characteristics of an enamel layer formed using the enamel paste composition in terms of its L-value vs firing temperature, the enamel being formulated to have a low L-value at the final firing (bending) temperature T₂ of the coated glass manufacturing method without crystallization. Figure 5 shows the silver hiding characteristics of an enamel layer formed using the enamel paste composition in terms of its dE value vs firing temperature, the enamel being formulated to have a low dEvalue (good silver hiding) at the final firing (bending) temperature T₂ of the coated glass manufacturing method without crystallization.

The resulting paste can thus be used to build an improved laminated motor vehicle glass panel. The enamel paste is deposited on a glass substrate, typically a soda-lime glass, dried at a given temperature and fired in order to obtain a smooth enamel surface. Subsequently, a thin multilayer silver coating is deposited over the glass sheet and the enamel, to form either a resistive heating element or an IR reflective barrier, after which bus bars are deposited over the enamel contacting the thin coating. The coated glass sheet is then heated and bent to form a shaped windshield component.

The specific paste composition as described above has been tailored for a specific windshield manufacturing process having specific T₁ and T₂ temperatures. However, it is also envisaged that for different applications the firing temperature T₁ and the bending temperature T₂ may differ. In this case, the formulation of the enamel paste can be modified to ensure that it has a firing temperature lower than T₁ and a crystallization temperature higher than T₂ in order to ensure that a thin film coating disposed on the enamel is not damaged during processing, while also achieving the colour characteristics required for an end application after processing at T₂. As such, the method of this specification is not limited to the specific enamel paste composition tailored for an end application having a specifically defined T₁ and T₂. That is, a skilled person in the art of enamel paste formulation will be able to utilize the teachings of this specification and modify the composition of the paste described herein to be suitable for thin film coating applications having different T₁ and T₂ values. The key essential features of any modified paste are that the formulation of the enamel paste has a firing temperature lower than T₁, a crystallization temperature higher than T₂ in order to ensure that a thin film coating disposed on the enamel is not damaged during processing, and also that it achieves the desired optical characteristics required for an end application after processing at T₂. Variants of the example described herein can achieve functional modifications for such end applications. As such, variants may fall within the ranges of frit compositions defined in the summary section, although it is also envisaged that a combination of different frit types could also meet the functional requirements of the method as described herein. Accordingly, while this invention has been particularly shown and described with reference to certain examples, it will be understood to those skilled in the art that various changes in form and detail may be made without departing from the scope of the invention as defined by the appended claims.

## Claims

1. An enamel paste comprising:
30 to 40% by weight of a bismuth silicate glass frit;
20 to 30% by weight of a zinc silicate glass frit;
15 to 25% by weight of a pigment; and
10 to 20% by weight of an organic carrier medium,
wherein the bismuth silicate glass frit comprises at least silicon, bismuth, boron, and lithium, and is free of lead and cadmium,
and wherein the bismuth silicate glass frit has the following composition:
| Component | Mol% |
|---|---|
| SiO₂ | 45 - 55 |
| Bi₂O₃ | 15 - 25 |
| B₂O₃ | 10 - 20 |
| Li₂O | 2 - 10 |
| Al₂O₃ | 0 - 5 |
| ZrO₂ | 0 - 5 |
| K₂O | 0 - 1 |
| MgO | 0 - 1 |
| CaO | 0 - 1; |
wherein the zinc silicate glass frit comprises at least silicon, zinc, sulphur, and lithium, and is free of lead, cadmium, and bismuth,
and wherein the zinc silicate glass frit has the following composition:
| Component | Mol% |
|---|---|
| SiO₂ | 45 - 55 |
| ZnO | 20 - 30 |
| Li₂O | 1 - 10 |
| S | 1 - 10 |
| B₂O₃ | 0 - 10 |
| Na₂O | 0 - 10 |
| F | 0 - 10 |
| MnO | 0 - 10 |
| CaO | 0 - 1 |
| Fe₂O₃ | 0 - 1 |
| MgO | 0 - 1; |
wherein the glass frits and the pigment in the enamel paste each have a D90 particle size distribution of less than 15 micrometres, and
wherein the enamel paste has a viscosity between 5 and 150 Pa.s⁻¹ at a shear rate of 100 s⁻¹.

2. An enamel paste according to claim 1,
wherein the pigment is a CuCr black pigment.

3. Use of the enamel paste according to any preceding claim for fabricating a coated glass article comprising a glass substrate, an enamel layer disposed on the glass substrate, and a thin functional coating having a thickness of no greater than 0.5 micrometres disposed on the enamel layer.

4. A method of fabricating a coated glass article, the method comprising:
depositing an enamel paste according to any of the claims 1 or 2 on a portion of a glass substrate;
firing the enamel paste at a temperature T1 to form an enamel layer;
depositing a thin coating over at least a portion of the enamel layer, the thin functional coating having a thickness of no greater than 0.5 micrometres;
firing and bending the glass substrate with the enamel layer and the thin functional coating thereon at a temperature T2 which is greater than T1 to form the coated glass article,
wherein the enamel paste is formulated to have a melting temperature lower than T1 and a crystallization temperature higher than T2.

5. A method according to claim 4,
wherein the enamel layer has a surface roughness Rₐ of no more than 1 micrometre and/or a surface roughness R_{z} of no more than 5 micrometres.

6. A method according to claim 4 or claim 5,
wherein the enamel layer has an L-value of no more than 5.

7. A method according to any one of claims 4 to 6,
wherein the thin functional coating is deposited over at least a portion of the glass substrate in addition to being deposited over at least a portion of the pre-fired enamel layer.

8. A method according to any one of claims 4 to 7,
wherein the thin coating is electrically conductive and at least one electrical connector is deposited on the thin coating over the pre-fired enamel layer.

9. A method according to any one of claims 4 to 8,
wherein the thin coating comprises a plurality of sub-layers.

10. A method according to any one of claims 4 to 9,
wherein the thin coating is deposited via a vacuum deposition process.

11. A method according to any one of claims 4 to 10,
wherein the thin coating is no more than 0.4 micrometres in thickness.

12. A method according to claim 11, wherein the thin coating is no more than 0.3 micrometres in thickness.

13. A method according to claim 12, wherein the thin coating is no more than 0.2 micrometres in thickness.

14. A method according to claim 13, wherein the thin coating is no more than 0.1 micrometres in thickness.

15. A coated glass article fabricated according to the method of any one of claims 4 to 11.

## Patentansprüche

1. Emailpaste, umfassend:
30 bis 40 Gew.% einer Wismutsilikat-Glasfritte;
20 bis 30 Gew.% einer Zinksilikat-Glasfritte;
15 bis 25 Gew.% eines Pigments; und
10 bis 20 Gew.% eines organischen Trägermediums,
wobei die Wismutsilikat-Glasfritte mindestens Silicium, Wismut, Bor und Lithium umfasst und frei von Blei und Cadmium ist,
und wobei die Wismutsilikat-Glasfritte die folgende Zusammensetzung hat:
| Komponente | Mol.% |
|---|---|
| SiO₂ | 45 - 55 |
| Bi₂O₃ | 15 - 25 |
| B₂O₃ | 10 - 20 |
| Li₂O | 2 - 10 |
| Al₂O₃ | 0 - 5 |
| ZrO₂ | 0 - 5 |
| K₂O | 0 - 1 |
| MgO | 0 - 1 |
| CaO | 0 - 1; |
wobei die Zinksilikat-Glasfritte mindestens Silicium, Zink, Schwefel und Lithium umfasst und frei von Blei, Cadmium und Wismut ist,
und wobei die Zinksilikat-Glasfritte die folgende Zusammensetzung hat:
| Komponente | Mol.% |
|---|---|
| SiO₂ | 45 - 55 |
| ZnO | 20 - 30 |
| Li₂O | 1 - 10 |
| S | 1 - 10 |
| B₂O₃ | 0 - 10 |
| Na₂O | 0 - 10 |
| F | 0 - 10 |
| MnO | 0 - 10 |
| CaO | 0 - 1 |
| Fe₂O₃ | 0 - 1 |
| MgO | 0 - 1; |
wobei die Glasfritten und das Pigment in der Emailpaste jeweils eine D90-Partikelgrößenverteilung von weniger als 15 Mikrometern haben, und
wobei die Emailpaste eine Viskosität zwischen 5 und 150 Pa·s⁻¹ bei einer Scherrate von 100 s⁻¹ hat.

2. Emailpaste nach Anspruch 1,
wobei das Pigment ein schwarzes CuCr-Pigment ist.

3. Verwendung der Emailpaste nach einem der vorhergehenden Ansprüche zur Fertigung eines beschichteten Glasartikels, umfassend ein Glassubstrat, eine Emailschicht, die auf dem Glassubstrat angeordnet ist, und eine dünne funktionale Beschichtung mit einer Dicke nicht größer als 0,5 Mikrometer, die auf der Emailschicht angeordnet ist.

4. Verfahren zum Fertigen eines beschichteten Glasartikels, wobei das Verfahren umfasst:
Abscheiden einer Emailpaste nach einem der Ansprüche 1 oder 2 auf einem Anteil eines Glassubstrats;
Brennen der Emailpaste bei einer Temperatur T1, um eine Emailschicht zu bilden;
Abscheiden einer dünnen Beschichtung über mindestens einem Anteil der Emailschicht, wobei die dünne funktionale Beschichtung eine Dicke nicht größer als 0,5 Mikrometer hat;
Brennen und Biegen des Glassubstrats mit der Emailschicht und der dünnen funktionalen Beschichtung darauf bei einer Temperatur T2, die größer als T1 ist, um den beschichteten Glasartikel zu bilden,
wobei die Emailpaste so formuliert ist, dass sie eine Schmelztemperatur niedriger als T1 und eine Kristallisationstemperatur höher als T2 hat.

5. Verfahren nach Anspruch 4,
wobei die Emailschicht eine Oberflächenrauheit Rₐ von nicht mehr als 1 Mikrometer und/oder eine Oberflächenrauheit R_{z} von nicht mehr als 5 Mikrometern hat.

6. Verfahren nach Anspruch 4 oder Anspruch 5,
wobei die Emailschicht einen L-Wert von nicht mehr als 5 hat.

7. Verfahren nach einem der Ansprüche 4 bis 6,
wobei die dünne funktionale Beschichtung über mindestens einem Anteil des Glassubstrats abgeschieden wird, zusätzlich dazu, dass sie über mindestens einem Anteil der vorgebrannten Emailschicht abgeschieden wird.

8. Verfahren nach einem der Ansprüche 4 bis 7,
wobei die dünne Beschichtung elektrisch leitfähig ist und mindestens ein elektrischer Verbinder auf der dünnen Beschichtung über der vorgebrannten Emailschicht abgeschieden wird.

9. Verfahren nach einem der Ansprüche 4 bis 8,
wobei die dünne Beschichtung eine Vielzahl von Teilschichten umfasst.

10. Verfahren nach einem der Ansprüche 4 bis 9,
wobei die dünne Beschichtung mittels eines Vakuumabscheidungsprozesses abgeschieden wird.

11. Verfahren nach einem der Ansprüche 4 bis 10,
wobei die dünne Beschichtung eine Dicke von nicht mehr als 0,4 Mikrometern hat.

12. Verfahren nach Anspruch 11, wobei die dünne Beschichtung eine Dicke von nicht mehr als 0,3 Mikrometern hat.

13. Verfahren nach Anspruch 12, wobei die dünne Beschichtung eine Dicke von nicht mehr als 0,2 Mikrometern hat.

14. Verfahren nach Anspruch 13, wobei die dünne Beschichtung eine Dicke von nicht mehr als 0,1 Mikrometern hat.

15. Beschichteter Glasartikel, der nach dem Verfahren gemäß einem der Ansprüche 4 bis 11 gefertigt ist.

## Revendications

1. Pâte d'émail comprenant :
30 à 40 % en poids d'une fritte de verre au silicate de bismuth ;
20 à 30 % en poids d'une fritte de verre au silicate de zinc ;
15 à 25 % en poids d'un pigment ; et
10 à 20 % en poids d'un milieu de support organique,
dans laquelle la fritte de verre au silicate de bismuth comprend au moins du silicium, du bismuth, du bore et du lithium, et est exempte de plomb et de cadmium,
et dans laquelle la fritte de verre au silicate de bismuth a la composition suivante :
| Composant | % en moles |
|---|---|
| SiO₂ | 45 à 55 |
| Bi₂O₃ | 15 à 25 |
| B₂O₃ | 10 à 20 |
| Li₂O | 2 à 10 |
| Al₂O₃ | 0 à 5 |
| ZrO₂ | 0 à 5 |
| K₂O | 0 à 1 |
| MgO | 0 à 1 |
| CaO | 0 à 1 ; |
dans laquelle la fritte de verre au silicate de zinc comprend au moins du silicium, du zinc, du soufre, et du lithium, et est exempte de plomb, de cadmium et de bismuth,
et dans laquelle la fritte de verre au silicate de zinc a la composition suivante :
| Composant | % en moles |
|---|---|
| SiO₂ | 45 à 55 |
| ZnO | 20 à 30 |
| Li₂O | 1 à 10 |
| S | 1 à 10 |
| B₂O₃ | 0 à 10 |
| Na₂O | 0 à 10 |
| F | 0 à 10 |
| MnO | 0 à 10 |
| CaO | 0 à 1 |
| Fe₂O₃ | 0 à 1 |
| MgO | 0 à 1 ; |
dans laquelle les frittes de verre et le pigment dans la pâte d'émail ont chacun une distribution de granulométrie D90 inférieure à 15 micromètres, et
dans laquelle la pâte d'émail a une viscosité comprise entre 5 et 150 Pa.s⁻¹ à une vitesse de cisaillement de 100 s⁻¹.

2. Pâte d'émail selon la revendication 1,
dans laquelle le pigment est un pigment noir au CuCr.

3. Utilisation de la pâte d'émail selon l'une quelconque des revendications précédentes pour fabriquer un article en verre revêtu comprenant un substrat en verre, une couche d'émail disposée sur le substrat en verre, et un revêtement fonctionnel mince ayant une épaisseur non supérieure à 0,5 micromètre disposé sur la couche d'émail.

4. Procédé de fabrication d'un article en verre revêtu, le procédé comprenant :
la déposition d'une pâte d'émail selon l'une quelconque des revendications 1 ou 2 sur une portion d'un substrat en verre ;
la cuisson de la pâte d'émail à une température T1 pour former une couche d'émail ;
la déposition d'un revêtement mince sur au moins une portion de la couche d'émail, le revêtement fonctionnel mince ayant une épaisseur non supérieure à 0,5 micromètre ;
la cuisson et le cintrage du substrat en verre avec la couche d'émail et le revêtement fonctionnel mince sur celui-ci à une température T2 qui est supérieure à T1 pour former l'article en verre revêtu,
dans lequel la pâte d'émail est formulée pour avoir une température de fusion inférieure à T1 et une température de cristallisation supérieure à T2.

5. Procédé selon la revendication 4,
dans lequel la couche d'émail a une rugosité de surface Rₐ non supérieure à 1 micromètre et/ou une rugosité de surface R₂ non supérieure à 5 micromètres.

6. Procédé selon la revendication 4 ou la revendication 5,
dans lequel la couche d'émail a une valeur L non supérieure à 5.

7. Procédé selon l'une quelconque des revendications 4 à 6,
dans lequel le revêtement fonctionnel mince est déposé sur au moins une portion du substrat en verre en plus d'être déposé sur au moins une portion de la couche d'émail précuite.

8. Procédé selon l'une quelconque des revendications 4 à 7,
dans lequel le revêtement mince est électriquement conducteur et au moins un connecteur électrique est déposé sur le revêtement mince au-dessus de la couche d'émail précuite.

9. Procédé selon l'une quelconque des revendications 4 à 8,
dans lequel le revêtement mince comprend une pluralité de sous-couches.

10. Procédé selon l'une quelconque des revendications 4 à 9,
dans lequel le revêtement mince est déposé via un procédé de déposition sous vide.

11. Procédé selon l'une quelconque des revendications 4 à 10,
dans lequel le revêtement mince a une épaisseur non supérieure à 0,4 micromètre.

12. Procédé selon la revendication 11, dans lequel le revêtement mince a une épaisseur non supérieure à 0,3 micromètre.

13. Procédé selon la revendication 12, dans lequel le revêtement mince a une épaisseur non supérieure à 0,2 micromètre.

14. Procédé selon la revendication 13, dans lequel le revêtement mince a une épaisseur non supérieure à 0,1 micromètre.

15. Article en verre revêtu fabriqué conformément au procédé de l'une quelconque des revendications 4 à 11.
